## Europäisches Patentamt

## European Patent Office

## Office européen des brevets

(19)

(11) Numéro de publication: **0 267 345**
**B1**

(12) # FASCICULE DE BREVET EUROPEEN

(45) Date de publication du fascicule du brevet:
**25.07.90**

(21) Numéro de dépôt: **86440087.4**

(22) Date de dépôt: **13.10.86**

(51) Int. Cl.⁵: **B25J 19/06,** B25J 17/02,
B25J 9/14

(54) **Joint multidirectionnel verrouillable pour manipulateur.**

(43) Date de publication de la demande:
**18.05.88 Bulletin 88/20**

(45) Mention de la délivrance du brevet:
**25.07.90 Bulletin 90/30**

(84) Etats contractants désignés:
**AT BE CH DE ES FR GB GR IT LI LU NL SE**

(56) Documents cités:
**EP-A- 0 112 099**
**DE-A- 2 749 603**
**FR-A- 2 306 798**
**FR-A- 2 549 916**
**FR-A- 2 580 978**
**GB-A- 2 068 891**
**GB-A- 2 127 775**
**US-A- 3 683 747**

(73) Titulaire: **ETUDES TECHNIQUES-FRANCHE COMTE-ALSACE ETFA Sàrl, 49, rue de Mulhouse, F-90000 Belfort(FR)**

(72) Inventeur: **Baills, Jean-Michel, 72 rue Maréchal Foch, F-90700 Chatenois(FR)**
Inventeur: **Cretien, George, 32 rue du Magasin, F-90000 Belfort(FR)**

(74) Mandataire: **Nuss, Pierre, 10, rue Jacques Kablé, F-67000 Strasbourg(FR)**

## Description

La présente invention concerne le domaine des dispositifs de manutention automatique, en particulier des manipulateurs et robots, et a pour objet un dispositif de mise en référence pour éléments de préhension destinés à la manutention, libre spatialement, verrouillable, et de sécurité multidirectionnel.

Les manipulateurs et robots, ou autres dispositifs de manutention, sont des machines destinées à transférer des pièces d'un poste de travail à un autre, ou d'une palette à un poste de travail et inversement et sont équipés d'une ou de plusieurs pinces, en général une seule, pour la préhension des pièces, montées sur l'extrémité des bras de manière mobile ou fixe par rapport à ces derniers.

Actuellement, ces pinces sont généralement montées directement sur les bras, de sorte qu'un obstacle éventuel sur le parcours décrit par la pince, avec ou sans la pièce, peut être la cause d'une détérioration du manipulateur ou robot et/ou de la pièce.

Pour obvier à cet inconvénient, il a été proposé d'interposer entre la pince et le bras une plaque de montage dite "fusible" destinée à se rompre en cas de sollicitations inhabituelles telles que chocs, surcharge due à une imbrication de plusieurs pièces entre elles, etc.. Ce mode de réalisation permet, certes, d'éviter une destruction du manipulateur ou robot, mais ne permet cependant pas d'assurer la sécurité d'un opérateur contre un choc éventuel. En outre, chaque destruction du "porte-fusible" nécessite un arrêt de la machine en vue du remplacement dudit "fusible".

On connaît, en outre, par GB-A-2 068 891, un dispositif de sécurité monté entre un bras et une pince de robot.

On connaît également, par GB-A-2 127 775, un dispositif d'accouplement de sécurité qui est contrôlé par un circuit pneumatique. Dans ce dispositif il s'agit de créer une fuite dans le circuit pneumatique qui est muni d'un manocontact de déclenchement de l'entraînement.

En outre, DE-A-2 749 603 décrit un dispositif de liaison entre un bras de manipulation et une pince ou autre outil comportant un moyen de sécurité déformable qui est constitué par un axe central fixe monté dans un carter déplaçable contre l'action d'un ressort s'appuyant sur un épaulement de l'axe fixe.

Cependant, les dispositifs décrits dans GB-A-2 068 891, GB-A-2 127 775 et DE-A-2 749 603 ne permettent aucune liberté de mouvement de la pince par rapport au bras, de sorte qu'une mise en référence de la pince sur l'objet à saisir n'est pas possible.

En outre, dans ces documents, le retour automatique en position n'est pas possible et les dispositifs qui y sont décrits ne peuvent pas être contrôlés suivant deux sens de déplacement verticaux, de sorte qu'il n'existe aucune maîtrise desdits déplacements.

La présente invention a pour but de pallier ces inconvénients.

Elle a, en effet, pour objet un dispositif de mise en référence pour éléments de préhension destinés à la manutention et de sécurité multidirectionnel, monté entre le bras d'un manipulateur ou robot, ou autre dispositif de manutention, et la pince, ou autre moyen de préhension, et constitué par au moins un moyen de liaison pouvant immobiliser entre elles, sous une pression donnée et à une distance prédéterminée, les plaques de montage solidaires du bras et de la pince, et par au moins un moyen de déclenchement de sécurité arrêtant instantanément le mouvement du bras en cas de rencontre de la pince ou du dispositif avec un obstacle imprévu, caractérisé en ce que ladite liaison est libre spatialement et verrouillable, et en ce que le moyen de liaison est constitué par des vérins, da préférence trois vérins, les vérins étant montés à articulation au moyen de rotules, par la chape du cylindre à la plaque du bras, et par la chape du piston à la plaque de la pince, et le moyen de déclenchement de sécurité est constitué par une paire de capteurs de position ou de fin de course détectant respectivement les positions basse et haute du piston de l'un des vérins, chaque vérin étant muni d'une paire de capteurs de position ou de fin de course, lesdits capteurs de position ou de fin de course basse et haute étant des capteurs magnétiques, à came, ou inductifs, ou encore sous forme de cellules photo-électriques, ou pneumatiques et coopérant avec un élément mobile de chaque vérin, à savoir le piston, ou un élément solidaire de ce dernier, pour délivrer un signal d'arrêt de l'actionnement du bras, en présence d'obstacle ou de résistance imprévus, l'un, lors de l'approche de la pince vers la pièce à saisir, l'autre, lors du transport de ladite pièce.

L'invention sera mieux comprise grâce à la description ci-après, qui se rapporte à un mode de réalisation préféré, donné à titre d'exemple non limitatif, et expliqué avec référence au dessin schématique annexé, dans lequel :

la figure 1 est une vue partielle en élévation du dispositif conforme à l'invention, et
la figure 2 est une vue en plan, à plus petite échelle, représentant un schéma d'implantation du dispositif.

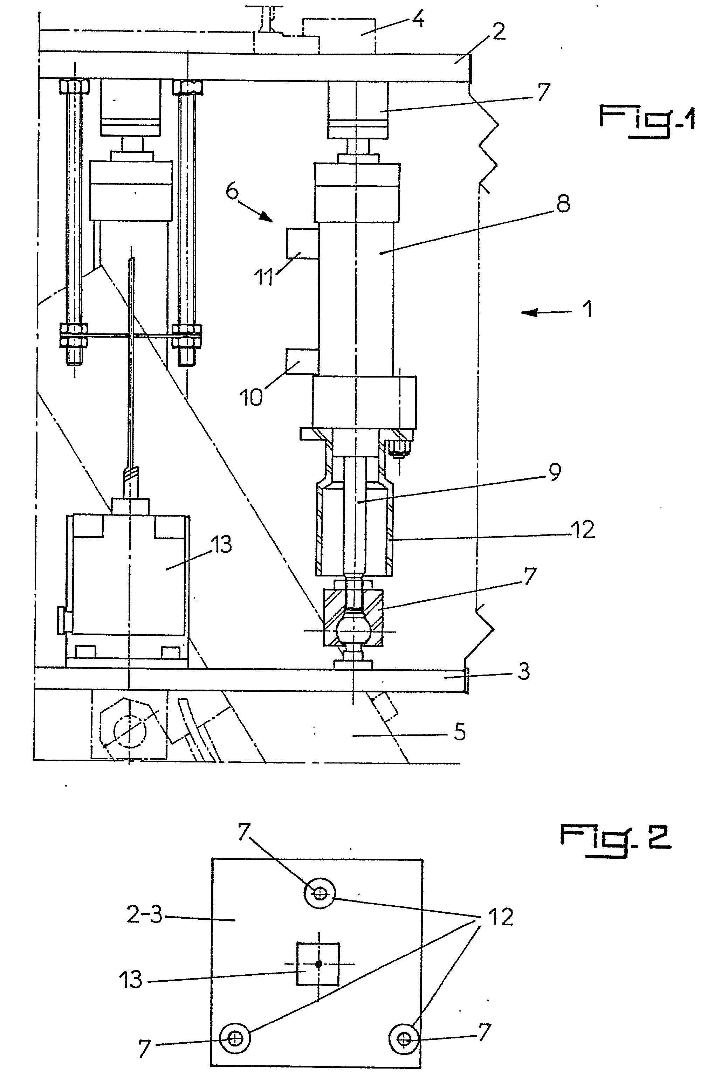

Conformément à l'invention, et comme le montrent, plus particulièrement, à titre d'exemple, les figures 1 et 2 du dessin annexé, le dispositif de mise en référence pour éléments de préhension destinés à la manutention, et de sécurité multidirectionnel, monté entre le bras 4 d'un manipulateur ou robot, ou autre dispositif de manutention, et la pince 5, ou autre moyen de préhension, essentiellement constitué par au moins un moyen de liaison 1 pouvant immobiliser entre elles, sous une pression donnée et à une distance prédéterminée, les plaques de montage 2 et 3 solidaires du bras 4 et de la pince 5, et par au moins un moyen 6 de déclenchement de sécurité arrêtant instantanément le mouvement du bras 4 en cas de rencontre de la pince 5 ou du dispositif avec un obstacle imprévu, est libre spatialement et verrouillable, et le moyen de liaison 1 est avantageusement constitué par trois vérins montés à articulation au moyen de rotules7, par la chape du cylindre 8 à la plaque 2 du bras 4, et par la chape du piston 9 à la plaque 3 de la pince 5, et le moyen 6 de déclenchement de sécurité est constitué par une paire de capteurs de position ou de fin de course 10 et 11 détectant respectivement les positions basse et haute du piston de l'un des vérins, chaque vérin étant muni d'une paire de capteurs de position ou de fin de course 10 et 11.

Le montage des extrémités des vérins sur les plaques 2 et 3 au moyen de rotules 7 permet un déplacement mutuel des plaques 2 et 3, par exemple lors d'un mouvement de mise en référence et de saisie d'une pièce, pour réaliser l'alignement parfait de la pince 5 avec ladite pièce, indépendamment de la position du bras 4. Ainsi, une grande précision de la position du bras 4 par rapport à la pièce à saisir n'est plus nécessaire pour assurer un positionnement et une préhension corrects de ladite pièce dans la pince 5.

Les capteurs de position ou de fin de course basse 10 et haute 11 sont des capteurs magnétiques, à came, ou inductifs, ou encore sous forme de cellules photo-électriques, ou pneumatiques et coopèrent avec un élément mobile de chaque vérin, à savoir le piston 9 ou un élément solidaire de ce dernier pour délivrer un signal d'arrêt de l'actionnement du bras 4, en présence d'obstacle ou de résistance imprévu, l'un, 10, lors de l'approche de la pince vers la pièce à saisir, l'autre, 11, lors du transport de ladite pièce. En effet, lors de la mise en référence et de la préhension de la pièce, les pistons 9 des vérins sont déployés et les capteurs 10 de position ou de fin de course basse sont actionnés, les plaques 2 et 3 pouvant effectuer un mouvement relatif entre elles sans que les contacts desdits capteurs déclenchent grâce aux articulations à rotule 7. Après saisie d'une pièce par la pince 5, les vérins sont alimentés et les pistons 9 sont déplacés dans la position haute détectée par les capteurs 11, réalisant ainsi un soulèvement de la pièce de son support préalablement au déplacement du bras 4. La pression de charge des vérins est préréglée en fonction de la pièce à saisir pour permettre un déplacement facile dès l'apparition d'une surcharge ou autre force antagoniste.

Conformément à une autre caractéristique de l'invention, au moins un des vérins est muni d'une cloche 12 d'application sur la plaque 3 solidaire de la pince 5, cette cloche entourant coaxialement le piston 9 dudit vérin et s'appliquant sur la plaque 3 en entourant l'articulation à rotule 7 pour réaliser un plan d'appui, en fin de course de montée du piston, assurant une rigidification de la liaison entre les plaques 2 et 3 et ainsi un parallélisme parfait. En effet, par application de la surface circulaire de la cloche 12 sur la plaque 3, cette dernière est parfaitement perpendiculaire à l'axe du piston 9 et donc du vérin, et comme chaque piston 9 présente la même course, les deux plaques 2 et 3 sont maintenues parfaitement parallèles entre elles. De préférence, chaque vérin sera muni d'une cloche 12, de sorte que la rigidification du dispositif après saisie d'une pièce est améliorée.

Ainsi, lorsque les capteurs 11 sont actionnés, les axes passant par les rotules 7 de chaque vérin sont alignés et perpendiculaires aux plaques 2 et 3, et les cloches 12 sont appliquées sur la plaque 3. Les vérins sont avantageusement montés sur les plaques 2 et 3 suivant une disposition en triangle (figure 2) favorisant un bon équilibrage du dispositif.

Si, lors du déplacement de montée du bras 4, un ou plusieurs des capteurs 11 sont déclenchés suite à une surcharge de la pince 5 due à une imbrication de plusieurs pièces entre elles, ou du fait que la plaque 3 reste accrochée à un obstacle, ce déclenchement délivre instantanément un signal d'arrêt du manipulateur ou robot interrompant le programme de ce dernier. En outre, si la pince 5 avec la pièce ou la plaque 3 entre en contact avec un obstacle lors d'un déplacement horizontal ou d'une rotation dans le cas d'un fonctionnement en poignet, la force de réaction résultante exerce un moment de rotation sur les rotules 7, qui a pour effet de déplacer les pistons 9 des vérins dans le sens d'une sortie contre la pression régnant dans lesdits vérins, les cloches 12 formant chacune un point d'appui sur la plaque 3 du côté d'application de la force par l'obstacle. En effet, lors d'une telle rencontre avec un obstacle, si la force antagoniste est suffisamment grande, le bras de levier formé entre le point d'application de cette force et le point d'appui le plus proche des cloches 12 est tel que la pression de charge des vérins, et donc d'application des cloches 12 sur la plaque 3, peut être facilement surmontée, de sorte que les pistons 9 sont déplacés et que les capteurs 11 déclenchent.

Conformément à une autre caractéristique de l'invention, la cloche 12 peut également être remplacée par trois tiges d'appui solidaires du vérin.

Selon une autre caractéristique de l'invention, le dispositif peut être muni d'un capteur supplémentaire 13, indépendant des capteurs de position 10 et 11, sous forme d'une cellule ou d'un microcontact à tige de manoeuvre monté sur la plaque 3 et dont la tige coopère avec un guidage précis de forme correspondante solidaire de la plaque 2, cette cellule ou ce microcontact étant à déclenchement très rapide, et étant uniquement actif en position de verrouillage du dispositif. Un tel capteur supplémentaire, qui est seulement mis sous tension de commande par un détecteur de la pression de verrouillage des vérins, est particulièrement intéressant pour réaliser un déclenchement et donc un arrêt immédiat du robot ou manipulateur dans le cas de rencontre d'un obstacle en déplacement horizontal ou en poignet.

Les capteurs 10 et 11 sont avantageusement des capteurs présentant une plage d'actionnement relativement grande, de sorte que des sollicitations parasites ne sont pas prises en compte lors du déplacement du bras avec le dispositif et la pince, seuls les obstacles réels provoquant la délivrance d'un signal d'arrêt. En effet, en admettant que les capteurs présentent une plage d'actionnement de 20 mm, une légère retenue due à une mauvaise disposition de pièce, ou l'écartement sans heurt d'une pièce mobile est possible, le déplacement des pistons 9 ne dépassant pas alors les limites d'actionnement des capteurs.

Conformément à une autre variante de réalisation de l'invention, non représentée au dessin annexé, le moyen de liaison 1 est constitué, de préférence, par trois ensembles télescopiques, montés à articulation par rotule sur les plaques 2 et 3, et dont au moins un est muni d'un dispositif d'immobilisation des plaques 2 et 3 parallèlement entre elles à une distance donnée et sous une pression donnée. Un tel mode de réalisation consiste, par exemple, en deux tiges télescopiques et en un vérin muni d'une cloche, les tiges télescopiques assurant le maintien de la plaque inférieure avec la pince pendant le mouvement d'approche du bras, tandis que le vérin assure la rigidification du dispositif lors du déplacement inverse.

Il est également possible de réaliser le dispositif sous forme d'un vérin unique reliant les plaques 2 et 3 et de dispositifs de positionnement annexes tels que des points centreurs d'appui, le moyen de déclenchement de sécurité pouvant être solidaire desdits dispositifs de positionnement annexes ou du vérin.

Enfin, selon une autre variante de réalisation de l'invention, il est également possible de remplacer les rotules 7 par des articulations simples. Ainsi, le nombre de directions de liberté de la pince 5 par rapport au bras 4 peut être limité.

Grâce à l'invention, il est possible de réaliser une mise en référence aisée d'un dispositif de préhension sur une pièce, de repositionner ou positionner cette dernière dans l'espace, ainsi que d'assurer une sécurité parfaite tant pour les opérateurs que pour les manipulateurs ou robots contre les risques d'accidents ou de détériorations dus à des obstacles se trouvant sur le parcours du bras de tels manipulateurs ou robots.

Bien entendu, l'invention n'est pas limitée au mode de réalisation décrit et représenté au dessin annexé. Des modifications restent possibles, notamment du point de vue de la constitution des divers éléments ou par substitution d'équivalents techniques, sans sortir pour autant du domaine de protection de l'invention.

## Revendications

1. Dispositif de mise en référence pour éléments de préhension destinés à la manutention et de sécurité multidirectionnel, monté entre le bras (4) d'un manipulateur ou robot, ou autre dispositif de manutention, et la pince (5), ou autre moyen de préhension, et constitué par au moins un moyen de liaison (1) pouvant immobiliser entre elles, sous une pression donnée et à une distance prédéterminée, les plaques de montage (2 et 3) solidaires du bras (4) et de la pince (5), et par au moins un moyen (6) de déclenchement de sécurité arrêtant instantanément le mouvement du bras (4) en cas de rencontre de la pince (5) ou du dispositif avec un obstacle imprévu, caractérisé en ce que ladite liaison est libre spatialement et verrouillable, et en ce que le moyen de liaison (1) est constitué par des vérins, da préférence trois vérins, les vérins étant montés à articulation au moyen de rotules (7), par la chape du cylindre (8) à la plaque (2) du bras (4), et par la chape du piston (9) à la plaque (3) de la pince (5), et le moyen (6) de déclenchement de sécurité est constitué par une paire de capteurs de position ou de fin de course (10 et 11) détectant respectivement les positions basse et haute du piston de l'un des vérins, chaque vérin étant muni d'une paire de capteurs de position ou de fin de course (10 et 11), lesdits capteurs de position ou de fin de course basse (10) et haute (11) étant des capteurs magnétiques, à came, ou inductifs, ou encore sous forme de cellules photo-électriques, ou pneumatiques et coopérant avec un élément mobile de chaque vérin, à savoir le piston (9), ou un élément solidaire de ce dernier, pour délivrer un signal d'arrêt de l'actionnement du bras (4), en présence d'obstacle ou de résistance imprévus, l'un, (10), lors de l'approche de la pince vers la pièce à saisir, l'autre (11), lors du transport de ladite pièce.

2. Dispositif, suivant la revendication 1, caractérisé en ce qu'au moins un des vérins est muni d'une cloche (12) d'application sur la plaque (3) solidaire de la pince (5), cette cloche entourant coaxialement le piston (9) dudit vérin et s'appliquant sur la plaque (3) en entourant l'articulation à rotule (7) pour réaliser un plan d'appui, en fin de course de montée du piston, assurant une rigidification de la liaison entre les plaques (2 et 3) et ainsi un parallélisme parfait, et donc le verrouillage du dispositif.

3. Dispositif, suivant la revendication 2, caractérisé en ce que la cloche (12) peut également être remplacée par trois tiges d'appui solidaires du vérin.

4. Dispositif, suivant la revendication 1, caractérisé en ce qu'il est muni d'un capteur supplémentaire (13) indépendant des capteurs de position (10 et 11) sous forme d'une cellule ou d'un microcontact à tige de manoeuvre monté sur la plaque (3) et dont la tige coopère avec un guidage précis de forme correspondante solidaire de la plaque (2), cette cellule ou ce microcontact étant à déclenchement très rapide, et étant uniquement actif en position de verrouillage.

5. Dispositif, suivant la revendication 1, caractérisé en ce que le moyen de liaison (1) est constitué, de préférence, par trois ensembles télescopiques, montés à articulation par rotule sur les plaques (2 et 3), et dont au moins un est muni d'un dispositif d'immobilisation des plaques (2 et 3) parallèlement entre elles à une distance donnée et sous une pression donnée.

6. Dispositif, suivant la revendication 1, caractérisé en ce qu'il est sous forme d'un vérin unique reliant les plaques (2 et 3) et de dispositifs de positionnement annexes tels que des points centreurs d'appui, le moyen de déclenchement de sécurité pouvant être solidaire desdits dispositifs de positionnement annexes ou du vérin.

## Claims

1. A reference device for gripping elements intended for handling and having multidirectional safety, which is mounted between the arm (4) of a manipulator or robot, or other handling device, and the gripper (5) or other gripping means, and is composed of at least one connecting means (1) capable of immobilizing therebetween, under a given pressure and at a predetermined distance, the assembly plates (2 and 3) integral with the arm (4) and the gripper (5), and of at least one safety tripping means (6) which instantaneously stops the movement of the arm (4) if the gripper (5) or the device encounters an unexpected obstacle, characterised in that said connection is spatially free and is lockable and in that the connecting means (1) is composed of jacks, preferably of three jacks, the jacks being articulated by means of ball-and-socket joints (7) by the cup of the cylinder (8) to the plate (2) of the arm (4) and by the cup of the piston (9) to the plate (3) of the gripper (5), and the safety tripping means (6) is constituted by a pair of position or end-of-travel sensors (10 and 11) respectively detecting the bottom and top positions of the piston of one of the jacks, each jack being equipped with a pair of position or end-of-travel sensors (10 and 11), said sensors, which detect the position or the end-of-travel at the bottom (10) and top (11) being magnetic cam-operated or inductive sensors or again in the form of photoelectric or pneumatic cells and co-operating with a moving element of each jack, that is the piston (9), or an element integral therewith, to deliver a signal for stopping the actuation of the arm (4) in the presence of an unexpected obstacle or resistance, the sensor (10) as the gripper approaches the item to be gripped and the sensor (11) as said item is being transported.

2. A device according to claim 1, characterised in that at least one of the jacks is equipped with a bell (12) for application on the plate (3) integral with the gripper (5), this bell coaxially surrounding the piston (9) of said jack and being placed on the plate (3), while surrounding the ball-and-socket joint (7) to produce a supporting plane, at the end of rising travel of the piston, which rigidifies the connection between the plates (2 and 3) and thus produces perfect parallelism and therefore the locking of the device.

3. A device according to claim 2, characterised in that the bell (12) can also be replaced by three supporting rods integral with the jack.

4. A device according to claim 1, characterised in that it is equipped with an additional sensor (13), which is independent of the position sensors (10 and 11), in the form of a cell or a microcontact which has a control rod and is mounted on the plate (3) and of which the rod co-operates with a precise guidance means of corresponding shape which is integral with the plate (2), this cell or microcontact having very rapid tripping action and being active only in the locking position.

5. A device according to claim 1, characterised in that the connecting means (1) is preferably composed of three telescopic assemblies which are articulated by ball-and-socket joints on the plates (2 and 3) and of which at least one is equipped with a device for immobilising the plates (2 and 3) in parallel with one another at a given distance and under a given pressure.

6. A device according to claim 1, characterised in that it is in the form of a single jack which links the plates (2 and 3) and of auxiliary positioning devices such as centering support points, wherein the safety tripping means can be integral with said auxiliary positioning devices or with the jack.

**Patentansprüche**

1. Verriegelbares, mehrachsiges Gelenk für Manipulatoren, montiert zwischen den Arm (4) eines Manipulators oder Roboters oder eine andere Haltevorrichtung, und die Zange (5) oder ein anderes Greifmittel, und bestehend aus mindestens einem Verbindungsmittel (1) welches unter einem gegebenen Druck und auf eine vorgegebene Entfernung die mit dem Arm (4) und der Zange (5) fest verbundenen Aufbauplatten (2 und 3) zueinander feststellen kann, und aus mindestens einem Mittel (6) zur Sicherheitsauslösung, das sofort die Bewegung des Arms (4) im Falle eines Zusammentreffens der Zange (5) oder der Vorrichtung mit einem unvorhergesehenen Hindernis arretiert, dadurch gekennzeichnet, daß dieses Verbindungsmittel räumlich frei beweglich und verriegelbar ist, und daß das Verbindungsmittel (1) aus Zylindern, vorzugsweise drei Zylindern besteht, wobei die Zylinder gelenkig mit Hilfe von Kugelgelenken (7) über das Gehäuse des Zylinders (8) an der Platte (2) des Arms (4), und über das Gehäuse des Kolbens (9) an der Platte (3) der Zange (5) befestigt sind, und das Mittel (6) zur Sicherheitsauslösung aus einem Paar Stellungsgebern oder Endlagegebern (10 und 11) besteht, welche die obere bzw. untere Stellung des Kolbens eines der Zylinder erfassen, wobei jeder Zylinder mit einem paar Stellungsgebern oder Endlagegebern (10 und 11) versehen ist, diese unteren (10) und oberen (11) Stellungs- oder Endlagegeber magnetisch, mit Nocken oder induktiv oder auch als photoelektrische Zellen ausgebildet, oder pneumatisch sind und mit einem beweglichen Element jedes Zylinders, d.h. dem Kolben (9) oder einem mit diesem letzteren fest verbundenen Element zusammenwirken, um ein Signal zum Anhalten der Bewegung des Arms (4), bei Auftreten eines Hindernisses oder unvorhergesehenen Widerstandes, der eine (10) während der Annäherung der Zange an das zu ergreifende Stück, und der andere (11) während des Transports dieses Stücks, abzugeben.

2. Vorrichtung nach Anspruch 1, dadurch gekennzeichnet, daß mindestens einer der Zylinder mit einer Glocke (12) zum Einsatz auf die mit der Zange (5) fest verbundene Platte (3) versehen ist, wobei diese Glocke den Kolben (9) dieses Zylinders koaxial umgibt und auf der Platte (3) aufsetzt, wobei sie das Gelenklager (7) umgibt, um eine Auflagefläche am Ende des Kolbenhubs herzustellen, wodurch eine Versteifung der Verbindung zwischen den Platten (2 und 3) und somit eine perfekte Parallellage und somit die Verriegelung der Vorrichtung gewährleistet ist.

3. Vorrichtung nach Anspruch 2, dadurch gekennzeichnet, daß die Glocke (12) auch durch drei mit dem Zylinder fest verbundene Stützstäbe ersetzt werden kann.

4. Vorrichtung nach Anspruch 1, dadurch gekennzeichnet, daß sie mit einem von den Stellungsgebern (10 und 11) unabhängigen, zusätzlichen Geber (13) in Form einer Zelle oder eines auf die Platte (3) montierten Mikrokontakts mit Betätigungshebel versehen ist und dessen Hebel mit einer mit der Platte (2) fest verbundenen, präzisen Führung entsprechender Form zusammenwirkt, wobei diese Zelle oder dieser Mikrokontakt sehr schnell ausgelöst, und nur in der Verriegelungsstellung aktiv wird.

5. Vorrichtung nach Anspruch 1, dadurch gekennzeichnet, daß das Verbindungsmittel (1) vorzugsweise aus drei gelenkig durch Kugelgelenke auf den Platten (2 und 3) montierten Teleskopeinheiten besteht, und von welchen mindestens eine mit einer Vorrichtung zur Feststellung der Platten (2 und 3) parallel zueinander und in einem gegebenen Abstand und unter einem gegebenen Druck versehen ist.

6. Vorrichtung nach Anspruch 1, dadurch gekennzeichnet, daß sie als ein einziger, die Platten (2 und 3) miteinander verbindender Zylinder und als Zusatz-Positioniervorrichtungen wie z.B. Zentrier-Lagerpunkten ausgebildet ist wobei das Mittel zur Sicherheitsauslösung mit diesen Zusatz-Positioniervorrichtungen oder mit dem Zylinder fest verbunden sein kann.

EP 0 267 345 B1

**Fig-1**

**Fig-2**